# EUROPEAN PATENT APPLICATION

(11) **EP 4 717 377 A1**
(43) Date of publication of application: **01.04.2026**
(21) Application number: 25205019.0
(22) Date of filing: 26.09.2025
(51) Int. Cl.: B22F 10/28, B22F 10/37, B29C 64/153, B29C 64/205, B33Y 10/00, B33Y 30/00

(54) **IMPROVING FLOWABILITY OF AM POWDERS**

(30) Priority: 26.09.2024 US 202418897978
(71) Applicant: PRATT & WHITNEY CANADA CORP., Longueuil, Québec J4G 1A1 (CA)
(72) Inventor: POULIN, Jean-Rene, (01BE5) Longueuil, J4G 1A1 (CA); RICHARD, Francois, (01BE5) Longueuil, J4G 1A1 (CA)
(74) Representative: Dehns

(57) **Abstract**

A powder bed fusion additive manufacturing system (100') includes a build powder bed (106') positioned on a build plate (108') in a build chamber (110'), an energy source scanning system (115') configured to scan an energy source (116') across a top layer (118') of the build powder bed (106') to consolidate selected portions of the top layer (118') to build a single layer of a desired part (120'), a build piston (112') configured to adjust the height of the build plate (108') after the layer of the desired part (120') is built, and a fresh build powder distributor (126') configured to distribute a layer fresh build powder (104') over a build powder bed (106') such that the layer of fresh build powder (104') is level and smooth. The fresh build powder distributor (126') comprises a distributor excitation device (126a') configured to cause the fresh build powder distributor (126') to vibrate at a predetermined vibrational frequency while distributing the layer of fresh build powder (104') over the build powder bed (106').

## Description

### BACKGROUND

The present disclosure relates generally to powder bed fusion additive manufacturing (AM) techniques and, more particularly, to an approach to disturbing build powder in a powder bed fusion additive machine.

One of limiting factors to the productivity of additive manufacturing equipment constructed with a powder-bed based architecture is the time required to spread the powder feedstock to a thin and uniform layer. This is generally done with a mechanical device (a recoater) that travels across the whole build surface to deposit the powder feedstock evenly. The powder bed uniformity (e.g. thickness and density) is a critical variable of the process to ensure stable melting and defect-free consolidation of the powder.

The speed at which the powder layer can be spread to form a uniform thin layer is limited by the flowability of the powder feedstock, which is a characteristic related to the powder particles size distribution, shape distribution (e.g. sphericity), surface characteristics, density, etc.

### SUMMARY

One aspect of this disclosure is directed to a powder bed fusion (PBF) additive manufacturing (AM) system that includes a build powder bed positioned on a build plate in a build chamber, an energy source scanning system configured to scan an energy source across a top layer of the build powder bed to consolidate selected portions of the top layer to build a single layer of a desired part, a build piston configured to adjust the height of the build plate and the build powder bed after the layer of the desired part is built, and a fresh build powder distributor configured to distribute a layer fresh build powder over a build powder bed such that the layer of fresh build powder is level and smooth. The fresh build powder distributor comprises a distributor excitation device configured to cause the fresh build powder distributor to vibrate at a predetermined vibrational frequency while distributing the layer of fresh build powder over the build powder bed.

Another aspect of the disclosure is directed to a method of making a part on a PBF AM system that includes scanning, with an energy source scanning system, an energy source across a top layer of the build powder bed to consolidate selected portions of the top layer to build a single layer of a desired part; adjusting, with a build piston, the height of the build plate and the build powder bed after the layer of the desired part is built; distributing, with a fresh build powder distributor, a layer fresh build powder over a build powder bed such that the layer of fresh build powder is level and smooth; and vibrating, with a distributor excitation device, the fresh build powder distributor to vibrate at a predetermined vibrational frequency while distributing the layer of fresh build powder over the build powder bed.

### BRIEF DESCRIPTION OF THE DRAWINGS

Fig. 1 is a schematic view of a prior art powder bed fusion (PBF) additive manufacturing (AM) system.
Fig. 2 is a schematic view of a PBF AM system of the present disclosure.
Fig. 3 is a schematic view of another PBF AM system of the present disclosure.
Fig. 4 is a schematic view of yet another PBF AM system of the present disclosure

### DETAILED DESCRIPTION

A wide variety of parts including parts for gas turbine engines can be made using additive manufacturing (AM) methods, including powder bed fusion (PBF) AM techniques. PBF AM is an additive manufacturing, or 3-D printing, technology that uses an energy source, such as a laser (PBF-LB) or electron beam (PBF-EB), to sinter or fuse metallic or polymeric particles together in a layer-by-layer process. PBF is typically used as an industrial process to make near net shape parts with various geometries.

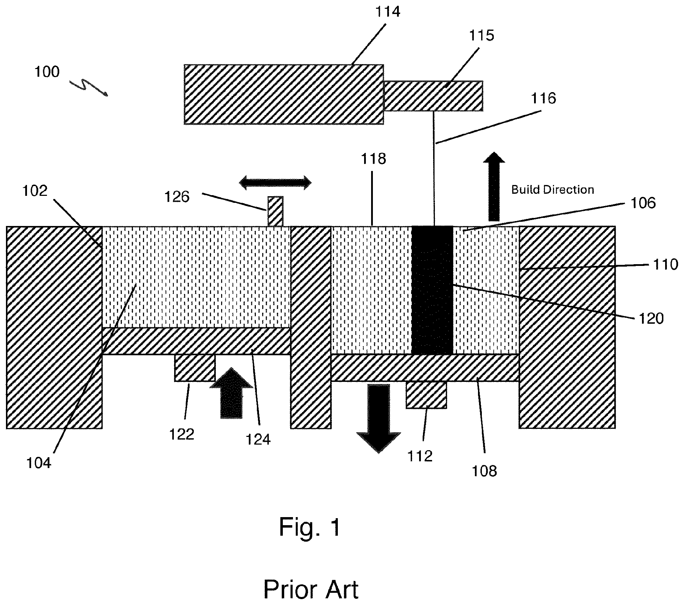

PBF AM techniques are typically implemented on a PBF AM system such as the system **100** depicted in Fig. 1. The PBF AM system **100** includes a build powder reservoir **102** that includes fresh build powder **104** that is available for use during a PBF AM build campaign. The build powder bed **106** that is in active use during a PBF AM build campaign is positioned on a build plate **108** that is configured to operate in a build chamber **110** based on movement of a build piston **112.** After an initial charge of build powder bed **106** from the build powder reservoir **102** is placed onto the build plate **108** in the build chamber **110,** an energy source **114** with scanning system **115** scans an energy source **116** over a top layer **118** of the build powder bed **106.** As discussed above, the energy source **116** can be a laser (for a PBF-LB process) or an electron beam (for a PBF-EB process). The energy source **116** fuses, sinters, or consolidates selected portions of the top layer **118** as it scans across the top layer **118.** As known in the art, the energy source scanning system **115** can be programmed to deliver a predetermined energy/power input with a predetermined scan pattern, scan rate, and energy source **116** power level to build a single layer of a desired part **120.**

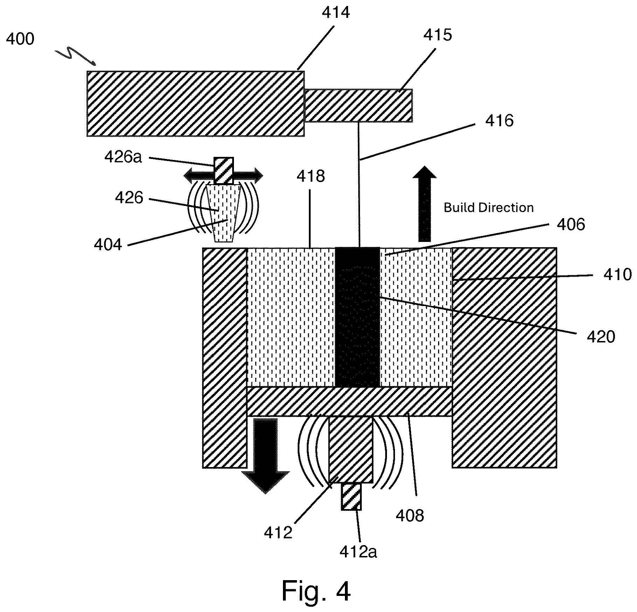

After the single layer of the desired part **120** is built, the build plate **108** is lowered, and a fresh powder distributor **126** is used to spread another layer of fresh powder feedstock **104** from build powder reservoir **102** on top of the build powder bed **106.** The fresh build powder distributor can be any device configured to distribute a layer of fresh build powder **104** on top of the build powder bed **106** such that the layer of fresh build powder **104** is level and smooth. Examples of suitable fresh build powder distributors include the recoaters **126, 126',** and **126"** of Figs. 1-3 and the fresh build powder distributor **426** of Fig. 4. A person of ordinary skill will recognize that other devices suitable for distributing a layer of fresh build powder **104** on top of the build powder bed **106** are available.

In the example of Fig. 1, the build piston **112** lowers the build plate **108** in the build chamber **110** to create space to spread a layer of fresh build powder **104** on top of the build powder bed **106.** In the example depicted in Fig. 1, a build powder piston **122** in the build powder reservoir raises a build powder plate **124** to raise a quantity of fresh build powder **104** that a recoater **126** spreads on top of the build powder bed **106.** The recoater **126** typically travels across (traverses) the entire surface of the build chamber **110** to provide an even layer of fresh build powder **104** on top of the build powder bed **106.** Following distribution of fresh build powder **104** on top of the build powder bed **106,** the energy source scanning system **115** scans the top layer of the build powder bed **106** to form the next layer of the part **120.** This process is repeated until the entire part **120** is built.

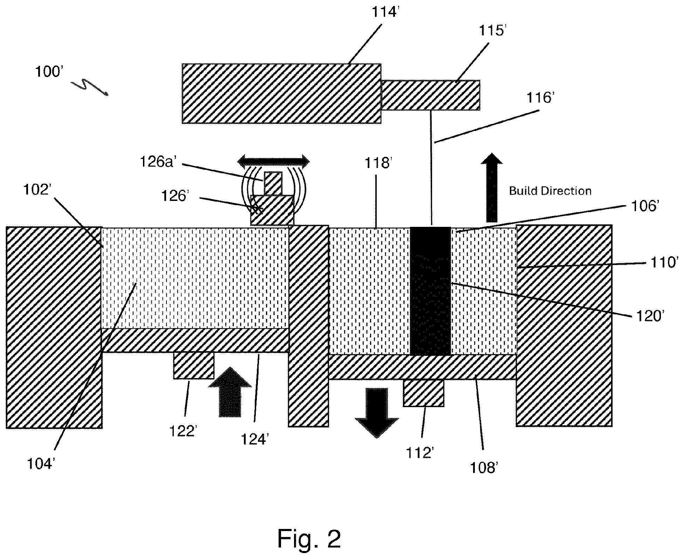

The speed at which the fresh build powder **104** can be spread with the recoater **126** to form a uniform thin layer of build powder bed **106** is limited by the flowability of the fresh build powder **104,** which is a characteristic related to the powder particles size distribution, shape distribution (e.g. sphericity), surface characteristics, density, etc. As shown in Fig. 2, the flowability of the fresh build powder **104'** can be improved by vibrating the recoater **126'** at a predetermined frequency. The predetermined frequency can be any frequency suitable to cause the fresh build powder 104' to pack into a more compacted, denser build powder bed **106'** as the recoater **126'** distributes fresh build powder **104'** over the build chamber **110'.** Vibration can reduce friction between powder particles and the substrate (build plate **108** or part **120)** and promote spreadability. Vibration can also reduce friction forces between the powder particles themselves allowing the powder particles to flow more freely. For example, the predetermined frequency can be between 10 Hz to 70 kHz. The recoater **126'** can be caused to vibrate using a selected excitation device **126a',** which may be a sonotrode, ultrasonic transducer, or any other device suitable to cause the recoater **126'** to vibrate at the predetermined frequency. In some examples, the excitation device **126a'** can be a separate device positioned mechanically adjacent to the recoater **126'** to cause the recoater **126'** to vibrate as desired. In other examples, the excitation device **126'** can be integrated into the recoater **126'** to cause the recoater **126'** to vibrate as desired. Building a part **120'** using a more compacted, denser powder bed **106'** can result in a denser part **120',** which may be desirable for certain application. Also, a more compact, denser powder bed **106'** can potentially facilitate a PBF process in which the energy source **114'** with scanning system **115'** can scan the energy source **116'** over the top layer **118'** of the build powder bed **106'** at a faster rate than for a less compacted, less dense build powder bed (e.g., like a build powder bed **106** deposited using the prior art method described in the context of Fig. 1). In some examples, the faster scan rate can be used because the build powder bed **106'** is more compacted, in a denser state, and requires less external energy input from the energy source **116'** for consolidation. By improving the powder bed 106' absorptivity of the energy provided by the energy source 116' and allowing a faster energy source **116'** travel speed, this increases the powder consolidation rate (often called build rate).

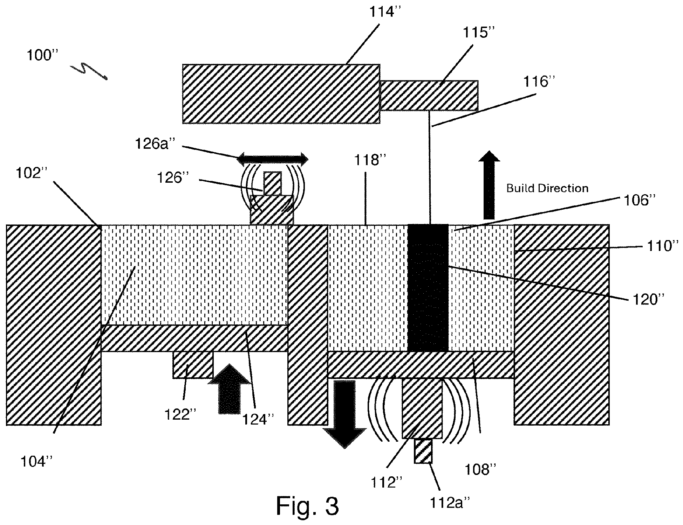

Fig. 3 shows another example of a PBF AM system **100"** of this disclosure that further improves the flowability of the fresh build powder **104"** by causing both the recoater **126"** and the build piston **112"** to vibrate with predetermined frequencies. Causing the build piston **112"** to vibrate also causes the connected build plate **108"** and build powder bed **106"** to vibrate. Alternately, the build plate **108"** can be caused to vibrate at the predetermined frequency directly, which then causes the build powder bed **106"** and build piston **112"** to vibrate. As with the example of Fig. 2, the predetermined vibrational frequencies can be any frequency suitable to cause the fresh build powder **104"** to pack into a more compacted, denser build powder bed **106"** as the recoater **126"** distributes fresh build powder **104"** over the build chamber **110"** and the build piston **112"** vibrates the connected build plate **108"** and build powder bed **106".** For example, the predetermined frequency can be between 10 Hz to 70 kHz. The specific predetermined vibrational frequencies for the recoater **126"** and the build piston **112"** can be selected to be appropriate for each particular application and can be the same for both the recoater **126"** and the build piston **112"** or different for the recoater **126"** and the build piston **112".** Similar to the example of Fig. 2, the recoater **126'** and build piston **112"** can be caused to vibrate using a selected excitation device **126a", 112a",** which may be a sonotrode, ultrasonic transducer, or any other device suitable to cause the recoater **126'** and build piston **112"** to vibrate at the predetermined frequency. In some examples, the excitation device **126a", 112a"** can be separate devices positioned mechanically adjacent to the recoater **126"** and build piston **112"** (or alternately the build plate **108"),** respectively, to cause the recoater **126"** and build piston **112"** (or alternately the build plate **108")** to vibrate as desired. In other examples, the excitation device **126", 112a"** can be integrated into the recoater **126"** and build piston **112"** (or alternately the build plate **108"),** respectively, to cause the recoater **126"** and build piston **112"** (or alternately the build plate **108")** to vibrate as desired. Vibrating both the recoater **126"** and build piston **112"** (or alternately the build plate **108")** will result in a yet more compacted, denser build powder bed **106"** can result in a yet faster energy source **116"** scan rate over the top layer **118"** of the build powder bed **106".**

Fig. 4 shows another example of a PBF AM system **400** of this disclosure that similarly improves the flowability of the fresh build powder **404** by causing one or both of a fresh build powder distributor **426** and the build piston **412** to vibrate with predetermined frequencies. Causing the build piston **412** to vibrate causes the connected build plate **408** and build powder bed **406** to vibrate. In the example of Fig. 4, fresh build powder **404** is distributed from a fresh build powder distributor **426** that moves across the build powder bed **406** rather than with a recoater as in the examples of Figs. 1-3. In the example of Fig. 4, the use of a fresh build powder distributor **426** to distribute fresh build powder **404** can eliminate the need for a fresh build powder reservoir. As with the examples of Fig. 2 and 3, the predetermined vibrational frequencies for the fresh build powder distributor **426** and the build plate **408** can be between 10 Hz to 70 kHz. The specific predetermined vibrational frequencies for the fresh build powder distributor **426** and the build plate **408** can be selected to be appropriate for each particular application and can be the same both the fresh build powder distributor **426** and the build plate **408** or different for the fresh build powder distributor **426** and the build plate **408.** In some examples, the predetermined vibrational frequency and fresh build powder distributor path over the build powder bed are selected to cause the layer of fresh build powder distributed over the build powder bed to be level and smooth.

Similar to the example of Figs. 2 and 3, the fresh build powder distributor **426** and the build plate **408** can be caused to vibrate using a selected excitation device **426a, 408a,** which may be a sonotrode, ultrasonic transducer, or any other device suitable to cause the fresh build powder distributor **426** and the build plate **408** to vibrate at the predetermined frequency. In some examples, the excitation device **426a, 408a** can be separate devices positioned mechanically adjacent to the fresh build powder distributor **426** and the build plate **408,** respectively, to cause the fresh build powder distributor **426** and the build plate **408** to vibrate as desired. In other examples, the excitation device **426a, 408a** can be integrated into the fresh build powder distributor **426** and the build plate **408,** respectively, to cause the fresh build powder distributor **426** and the build plate **408** to vibrate as desired. Vibrating one or both of the fresh build powder distributor **426** and the build plate **408** will result in a more compacted, denser build powder bed **406** can result in a faster energy source **416** scan rate over the top layer **418** of the build powder bed **406.**

Vibrating the recoater **126', 126",** fresh build powder distributor **426** and/or build piston **112", 412** (alternately the build plate **108", 408)** at a predetermined frequency as discussed above, results in improved build powder flowability compared with prior art approaches. The resulting PBF process can be faster to build/consolidate build powder due to build powder grains becoming more compact.

### DISCUSSION OF POSSIBLE EMBODIMENTS

The following are non-exclusive descriptions of possible embodiments of the present invention.

A powder bed fusion (PBF) additive manufacturing (AM) system includes a build powder bed positioned on a build plate in a build chamber, an energy source scanning system configured to scan an energy source across a top layer of the build powder bed to consolidate selected portions of the top layer to build a single layer of a desired part, a build piston configured to adjust the height of the build plate and the build powder bed after the layer of the desired part is built, and a fresh build powder distributor configured to distribute a layer fresh build powder over a build powder bed such that the layer of fresh build powder is level and smooth. The fresh build powder distributor comprises a distributor excitation device configured to cause the fresh build powder distributor to vibrate at a predetermined vibrational frequency while distributing the layer of fresh build powder over the build powder bed.

The component protection casing of the preceding paragraph can optionally include any one or more of the following features, configurations and/or additional elements:
The distributor excitation device is positioned mechanically adjacent to the fresh build powder distributor.
The predetermined vibrational frequency and fresh build powder distributor path over the build powder bed are selected to cause the layer of fresh build powder distributed over the build powder bed to be level and smooth.
The build piston comprises a piston excitation device configured to cause the build piston to vibrate at a predetermined vibrational frequency while the PBF AM system is in operation.
The piston excitation device is positioned mechanically adjacent to the fresh build powder distributor.
The predetermined vibrational frequency of the fresh build powder distributor and the predetermined vibrational frequency of the build piston are both between 10 Hz and 70 kHz.
Further comprising: a fresh build powder reservoir, wherein the fresh build powder distributor is a recoater.
The distributor excitation device is positioned mechanically adjacent to the recoater.
The distributor excitation device is integrated into the recoater.
The build piston comprises a piston excitation device configured to cause the build piston to vibrate at a predetermined vibrational frequency while the PBF AM system is in operation.
The piston excitation device is positioned mechanically adjacent to the build piston.
The piston excitation device is integrated into the build piston.
The predetermined vibrational frequency of the resh build powder distributor and the predetermined vibrational frequency of the build piston are between 10 Hz and 70 kHz.

A method of making a part on a PBF AM system includes distributing, with a fresh build powder distributor, a layer fresh build powder over a build powder bed such that the layer of fresh build powder is level and smooth; causing, with a distributor excitation device, the fresh build powder distributor to vibrate at a predetermined vibrational frequency while distributing the layer of fresh build powder over the build powder bed, wherein the distributor excitation device is in mechanical contact with the fresh build powder distributor; scanning, with an energy source scanning system, an energy source across a top layer of the build powder bed to consolidate selected portions of the top layer to build a single layer of a desired part; and adjusting, with a build piston, the height of the build plate and the build powder bed after the layer of the desired part is built.

The method of the preceding paragraph can optionally include any one or more of the following features, configurations and/or additional elements:

The predetermined vibrational frequency and fresh build powder distributor path over the build powder bed are selected to cause the layer of fresh build powder distributed over the build powder bed to level and smooth.

Further comprising vibrating, with a piston excitation device, the build piston at a predetermined vibrational frequency.

The predetermined vibrational frequency of the fresh build powder distributor and the predetermined vibrational frequency of the build piston are both between 10 Hz and 70 kHz.

The fresh build powder distributor is a recoater.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A powder bed fusion (PBF) additive manufacturing (AM) system (100'; 100"; 400) comprising:
a build powder bed (106'; 106"; 406) positioned on a build plate (108'; 108"; 408) in a build chamber (110'; 110");
an energy source scanning system (115') configured to scan an energy source (116') across a top layer (118'; 118"; 418) of the build powder bed (106'; 106"; 406) to consolidate selected portions of the top layer (118'; 118"; 418) to build a single layer of a desired part (120'; 120"; 420);
a build piston (112'; 112"; 412) configured to adjust the height of the build plate (108'; 108"; 408) and the build powder bed (106'; 106"; 406) after the layer of the desired part (120'; 120"; 420) is built; and
a fresh build powder distributor (126'; 126"; 426) configured to distribute a layer fresh build powder (104'; 104"; 404) over a build powder bed (106'; 106"; 406) such that the layer of fresh build powder (104'; 104"; 404) is level and smooth;
wherein the fresh build powder distributor (126'; 126"; 426) comprises a distributor excitation device (126a'; 126a"; 426a) configured to cause the fresh build powder distributor (126'; 126"; 426) to vibrate at a predetermined vibrational frequency while distributing the layer of fresh build powder (104'; 104"; 404) over the build powder bed (106'; 106''; 406).

2. The PBF AM system (100'; 100"; 400) of claim 1, wherein the distributor excitation device (126a'; 126a"; 426a) is positioned mechanically adjacent to the fresh build powder distributor (126'; 126"; 426).

3. The PBF AM system (100'; 100"; 400) of claim 1 or 2, wherein the predetermined vibrational frequency and fresh build powder distributor path over the build powder bed (106'; 106"; 406) are selected to cause the layer of fresh build powder (104'; 104"; 404) distributed over the build powder bed (106'; 106"; 406) to be level and smooth.

4. The PBF AM system (100'; 100"; 400) of claim 1, 2 or 3, wherein the build piston (112'; 112"; 412) comprises a piston excitation device (112a") configured to cause the build piston (112'; 112"; 412) to vibrate at a predetermined vibrational frequency while the PBF AM system (100'; 100"; 400) is in operation.

5. The PBF AM system (100; 100"; 400) of claim 4, wherein the piston excitation device (112a") is positioned mechanically adjacent to the fresh build powder distributor (126'; 126"; 426).

6. The PBF AM system (100'; 100"; 400) of claim 4 or 5, wherein the predetermined vibrational frequency of the fresh build powder distributor (126'; 126"; 426) and the predetermined vibrational frequency of the build piston (112'; 112"; 412) are both between 10 Hz and 70 kHz.

7. The PBF AM system (100'; 100"; 400) of any preceding claim, further comprising:
a fresh build powder reservoir (102'; 102"), wherein the fresh build powder distributor (126'; 126"; 426) is a recoater.

8. The PBF AM system (100'; 100"; 400) of claim 7, wherein the distributor excitation device (126a'; 126a"; 426a) is positioned mechanically adjacent to the recoater.

9. The PBF AM system (100'; 100"; 400) of claim 7, wherein the distributor excitation device (126a'; 126a"; 426a) is integrated into the recoater.

10. The PBF AM system (100'; 100"; 400) of claim 7, 8 or 9, wherein the build piston (112'; 112"; 412) comprises a piston excitation device (112a") configured to cause the build piston (112'; 112"; 412) to vibrate at a predetermined vibrational frequency while the PBF AM system (100'; 100"; 400) is in operation.

11. The PBF AM system (100'; 100"; 400) of claim 10, wherein the piston excitation device (112a") is positioned mechanically adjacent to the build piston (112'; 112"; 412).

12. The PBF AM system (100'; 100"; 400) of claim 10, wherein the piston excitation device (112a") is integrated into the build piston (112'; 112"; 412).

13. The PBF AM system (100'; 100"; 400) of claim 10, 11 or 12, wherein the predetermined vibrational frequency of the fresh build powder distributor (126'; 126"; 426) and the predetermined vibrational frequency of the build piston (112'; 112"; 412) are between 10 Hz and 70 kHz.

14. A method of making a part (120'; 120"; 420) on a powder bed fusion (PBF) additive manufacturing (AM) system comprising:
scanning, with an energy source scanning system (115'; 115"; 415), an energy source (116') across a top layer (118'; 118"; 418) of the build powder bed (106'; 106"; 406) to consolidate selected portions of the top layer (118'; 118"; 418) to build a single layer of a desired part (120'; 120"; 420);
adjusting, with a build piston (112'; 112"; 412), the height of the build plate (108'; 108"; 408) and the build powder bed (106'; 106"; 406) after the layer of the desired part (120'; 120"; 420) is built;
distributing, with a fresh build powder distributor (126'; 126"; 426), a layer fresh build powder (104'; 104"; 404) over a build powder bed (106'; 106''; 406) such that the layer of fresh build powder (104'; 104"; 404) is level and smooth; and
vibrating, with a distributor excitation device (126a'; 126a"; 426a), the fresh build powder distributor (126'; 126"; 426) to vibrate at a predetermined vibrational frequency while distributing the layer of fresh build powder (104'; 104"; 404) over the build powder bed (106'; 106"; 406), wherein, optionally:
the predetermined vibrational frequency and fresh build powder distributor path over the build powder bed (106'; 106"; 406) are selected to cause the layer of fresh build powder (104'; 104"; 404) distributed over the build powder bed (106'; 106"; 406) to level and smooth; and/or
wherein the fresh build powder distributor (126'; 126"; 426) is a recoater.

15. The method of claim 14, further comprising:
vibrating, with a piston excitation device (112a"), the build piston (112'; 112"; 412) at a predetermined vibrational frequency,
wherein, optionally, the predetermined vibrational frequency of the fresh build powder distributor (126'; 126"; 426) and the predetermined vibrational frequency of the build piston (112'; 112"; 412) are both between 10 Hz and 70 kHz.
